# EUROPEAN PATENT SPECIFICATION

(11) **EP 0 615 629 B1**
(45) Date of publication and mention of the grant of the patent: **02.01.2003**
(21) Application number: 92922886.4
(22) Date of filing: 22.10.1992
(51) Int. Cl.: G02F 1/17

(54) **LIGHT VALVE EMPLOYING A FILM COMPRISING AN ENCAPSULATED LIQUID SUSPENSION, AND METHOD OF MAKING SUCH FILM**
LICHTVENTIL MIT EINEM, EINE EINGEKAPSELTE, FLÜSSIGE SUSPENSION ENTHALTENDEN FILM UND HERSTELLUNGSVERFAHREN FÜR DIESEN FILM
FILM COMPRENANT UNE SUSPENSION LIQUIDE ENCAPSULEE, UTILISE DANS UN MODULATEUR DE LUMIERE, ET PROCEDE DE FABRICATION DE CE FILM

(30) Priority: 01.11.1991 US 786511
(43) Date of publication of application: 21.09.1994
(73) Proprietor: RESEARCH FRONTIERS INCORPORATED, Woodbury New York 11797 (US)
(72) Inventor: CHECK, Joseph, Aloysius, III, West Bayshore, NY 11706 (US)
(74) Representative: Bloch, Gérard
(86) International application number: US9209034
(87) International publication number: WO93009460

(56) References cited:
- GB-A- 1 306 981
- GB-A- 1 468 768
- US-A- 4 025 163
- US-A- 4 247 175
- US-A- 4 407 565
- US-A- 4 422 963
- US-A- 4 919 521
- PATENT ABSTRACTS OF JAPAN vol. 14, no. 547 (P-1138) & JP-A-02 232 630 (TOYOTA MOTOR) 14 September 1990

## Description

### Field Of The Invention

The present invention relates to light valves and more particularly to improvements relating to incorporating within a plastic film a light valve suspension used to control light transmission in a light valve.

### Background

Light valves have been used for over fifty years for modulation of light. Early examples are described in U.S. Patents 1,955,923, 1,962,496, 3,512,876 and 3,773,684. A conventional prior art light valve may be described as a cell formed of two walls that are spaced apart by a small distance, at least one wall being transparent, the walls having electrodes thereon usually in the form of transparent conductive coatings. The cell contains a "light valve suspension" namely small particles suspended in a liquid suspending medium. In the absence of an applied electrical field, the particles in the liquid suspension exhibit random Brownian movement, and hence a beam of light passing into the cell is reflected, transmitted or absorbed, depending upon the nature and concentration of the particles and the energy content of the light. When an electric field is applied through the light valve suspension in the light valve, the particles become aligned and for many suspensions most of the light can pass through the cell. Light valves have been proposed for many purposes including, e.g., alphanumeric displays, television displays, windows, mirrors, eyeglasses and the like to control the amount of light passing therethrough.

For light valves of large size oriented in a vertical position, hydrostatic pressure can cause a serious problem. This pressure arises because the weight of a column of the liquid light valve suspension tends to make the walls of a light valve bulge outward, especially toward the lower part of the light valve. Methods for reducing this problem have been suggested in the prior art, e.g., see U.S. Patent Nos. 3,742,600, 3,744,126 and 3,912,365. However, for large area light valves, such as may be desirable for use as windows, outdoor signs and other types of displays it is usually desirable that the thickness of the layer of the light valve suspension be substantially uniform over the whole active area of the light valve. If the layer thickness is not uniform, some parts of the light valve will appear darker than other parts, and application of a voltage to the device will also result in a non-uniform appearance because of non-uniform field strength from area to area. Moreover, bulging due to hydrostatic pressure can put severe strains on the seal around the cell and may break the seal.

Another problem with conventional light valves utilizing a liquid light valve suspension is the apprehension that if the cell wall or seal of the light valve is broken, the liquid light valve suspension could escape and cause damage to the user and/or objects near the light valve. This is of particular concern in eyewear applications, e.g., sunglasses, or ski goggles, where it might be believed that liquid valve suspension escaping from a broken light valve lens might harm the eye of the user.

Also, in certain applications, e.g., in eyewear applications which use for each eye a light valve comprising a sandwich of two lens blanks each coated with a conductive transparent coating (and possibly with an overcoating) with a light valve suspension therevetween, use of a suspension in liquid form would prevent one from freely shaping or machining the light valves to fit differently shaped frames.

As prior art US-A-4 919 521 is known which explicitly discloses a film suitable for use as the light-modulating unit of a light valve comprising a polymer matrix having distributed therein and in direct contact therewith, droplets of a liquid valve suspension, the liquid light valve suspension comprising organic particles suspended in a liquid suspended medium, the polymer matrix being formed from a mixture of a oligomer or a polymer and the liquid light valve suspension containing the organic particles.

### Summary of the invention

The present invention now provides a film suitable for use in a light valve as defined in claim 1, comprising a cross-linked polymer matrix having droplets of a light valve suspension distributed in the matrix, the light valve suspension comprising particles suspended in a liquid suspending medium. The particles exhibit random Brownian movement in the absence of an electric field applied to the light valve suspension and become aligned in the presence of an electric field applied to the light valve suspension.

In a preferred embodiment of the invention, a film of a cross-linked polymer matrix having droplets of a light valve suspension distributed therein is swollen with a suitable liquid. This improves the frequency response characteristics of the resulting film and reduces light scatter, as will be explained in detail hereinafter.

According to the invention, the cross-linked polymer matrix is a cross-linked polymer polyorganosiloxane.

When the film of the invention is formed from a liquid cross-linkable polyorganosiloxane oligomer or polymer, it is preferred to emulsify the liquid crosslinkable polyorganosiloxane oligomer or polymer and liquid light valve suspension with an organosiloxane/organic monomer copolymer as emulsifier, followed by treating a thin layer of the emulsion to cross-link the cross-linkable polyorganosiloxane oligomer or polymer, thereby forming the film of the invention.

The present invention also provides a light valve, comprising a cell having spaced apart cell walls and a film between the cell walls comprising a cross-linked polymer matrix having droplets of a light-valve suspension distributed in the matrix. The light valve suspension comprises particles suspended in a liquid suspending medium.

Further embodiments of the invention are defined in the dependent claims.

### The Liquid Light Valve Suspension

The liquid light valve suspension distributed in the film of the present invention may be any liquid light valve suspension known in the art and may be formulated according to known techniques. The term "liquid light valve suspension" as used herein means a "liquid suspending medium" in which a plurality of small particles are dispersed. The "liquid suspending medium" comprises one or more non-aqueous, electrically resistive liquids in which there is preferably dissolved at least one type of polymeric stabilizer which acts to reduce the tendency of the particles to agglomerate and to keep them dispersed.

As is known, inorganic and organic particles may be used in a light valve suspension, such as mica, metals, graphite, metal halides, polyhalides (sometimes referred to in the prior art as perhalides) of alkaloid acid salts and the like. The particles in the liquid suspension may be light-polarizing, such as halogen-containing light-polarizing materials, e.g., polyhalides of alkaloid acid salts. (The term "alkaloid" is used herein to mean an organic nitrogenous base, as defined in Hackh's Chemical Dictionary, Fourth Edition, McGraw-Hill Book Company, New York, 1969). If a polyhalide of an alkaloid acid salt is used, the alkaloid moiety may be a quinine alkaloid, as defined in Hackh's Chemical Dictionary, supra. U.S. Patents 2,178,996 and 2,289,712 refer in detail to the use of polyhalides of quinine alkaloid acid salts. The particles may be light absorbing or light reflecting.

Also, the particles.may be particles of a hydrogenated polyhalide of a quinine alkaloid acid salt, such as dihydrocinchonidine sulfate polyiodide, as described in U.S. Patent 4,131,334, or a light-polarizing metal halide or polyhalide, such as cupric bromide or purpureocobaltchloride sulfate polyiodide, as, e.g., in U.S. Patent 1,956,867. Preferably, the particles are light-polarizing polyhalide particles such as those described in U.S. Patent Nos. 4,877,313 and 5,002,701 which are more environmentally stable than prior art polyhalides.

In theory, any type of particle capable of reflecting, absorbing and/or transmitting desired wavelengths of visible light can be used in the liquid light valve suspension. For the purposes of the present invention, however, particles that reflect a substantial amount of visible light can cause objectionable light scatter and are therefore not usually desirable.

The shape of the particles used in the light valve suspension should preferably be "anisometric", i.e. the shape or structure of the particle is such that in one orientation the particle intercepts more light than in another orientation. Particles which are needle-shaped, rod-shaped, lath-shaped, or in the form of thin flakes, are suitable. Light-polarizing crystals are especially useful because they produce a pleasing visual appearance, but any type of light-absorbing particle, preferably exhibiting very little light scatter, can be employed.

The particles are preferably of colloidal size, that is the particles will have a large dimension averaging about 1 micron or less. It is preferred that most particles have large dimensions less than one-half of the wavelength of blue light, i.e. 2000 Angstroms or less to keep light scatter extremely low.

The particles are also preferably light-absorbing, that is the particles absorb a significant part, preferably most, of the light impinging on it and scatter relatively little of the light that impinges on them. Light-absorbing particles comprise many types of material including colored orientable pigments-and dyes, e.g. garnet red, conductive black or grey material such as graphite or carbon black, dichroic dyes such as are widely used in guest-host liquid crystal devices, light-polarizing materials, e.g., cupric bromide, and polyhalides, and especially polyiodides, e.g., those described in conjunction with prior art light valve devices.

The term "polyiodide" as used herein is used in the conventional sense and also in the same sense as the term "periodide" is used in numerous prior art light valve patents, e.g., see column 1 of U.S. Patent 1,951,664 (Land) entitled "Colloidal Suspensions and the Process of Making Same", to indicate a material which is a reaction product of a precursor compound, which may be a sulfate (or certain other salts as described in U.S. Patent 4,270,841) of heterocyclic nitrogenous bases with iodine and an iodide. Such reaction products are often called polyiodide compounds. This type of particle is discussed in detail in "The Optical Properties and Structure of Polyiodides" by D.A. Godina and G.P. Faerman published in The Journal of General Chemistry, U.S.S.R. Vol. 20, pp. 1005-1016, (1950). Herapathite, for example, is quinine bisulfate polyiodide, and its formula is given under the heading "quinine iodosulfate" as 4C₂₀H₂₄N₂O₂.3H₂SO₄.2HI.I₄.6H₂O in The Merck Index, 10th Ed. (Merck & Co., Inc., Rahway, N.J.). In more modern, preferred types of polyiodides, the precursor compound need not be a salt, e.g., see U.S. Patent Nos. 4,877,313 and 5,002,701. In these polyiodide compounds the iodine is thought to form chains and the compounds are strong light polarizers. The term "polyhalide" is used herein to mean a compound such as a polyiodide, but wherein at least some of the iodine in the iodide is replaced by another halogen element.

The liquid light valve suspension distributed in the film of the present invention may include any of the liquid suspending media previously proposed for use in light valves for suspending the particles. In general, the liquid suspending medium may comprise one or more electrically resistive, chemically inert liquids that will both suspend the particles and dissolve any polymeric stabilizer used to reduce the tendency of the particles to agglomerate and thus keep the particles in suspension. Liquid suspending media that are known in the art are useful herein, such as the liquid suspending media disclosed in U.S. Patent 4,247,175. In general one or both of the liquid suspending medium or the polymeric stabilizer dissolved therein is chosen so as to maintain the suspended particles in gravitational equilibrium.

A light valve suspension useful in the present invention is described in U.S. Patent 4,407,565 and is based upon the use as the liquid suspending medium of an electrically resistive, chemically inert, low molecular weight liquid fluorocarbon polymer having a specific gravity at room temperature of at least about 1.5 and having at least about 50% of its atoms constituted by halogen atoms, at least 60% of the halogen atoms being fluorine and the balance chlorine and/or bromine. Preferably, the liquid suspending medium also comprises a miscible electrically resistive organic liquid such as, for example, trialkyl trimellitate, etc. to provide gravitational equilibrium to the suspended particles and to assist in dispersing the particles in the liquid suspending medium. Other materials useful as the miscible electrically resistive organic liquid are those disclosed in U.S. Patent 4,772,103, and details concerning the liquid suspending material may be found in U.S. Patent 4,407,565.

Other types of suspensions which do not incorporate such halogenated liquids can also be used and can maintain the particles in gravitational equilibrium if a sufficient quantity of stabilizing polymer is employed therein.

Another useful light valve suspension is based on the use as the liquid suspending medium of organic liquids classified as plasticizers. Such "plasticizer" liquid suspending media may comprise one or more electrically resistive, chemically inert organic liquids that will suspend the particles and will dissolve the solid polymeric stabilizer but not the matrix polymer. For example, where the solid polymeric stabilizer is a solid poly(meth)acrylate, useful liquid suspending media include liquid plasticizers for poly(meth)acrylates, such as adipates, benzoates, glycerol triacetate, isophthalates, mellitates, oleates, chloroparaffins, phthalates, sebacates and the like. Liquid suspending media for other solid polymeric stabilizers may be similarly selected from liquids useful as plasticizers for such polymers. Preferably, trialkyltrimellitates, such as tri-n-propyl- or tri-n-butyl-trimellitate and/or dialkyl adipates, such as di-octyl adipate or di-2-ethylhexyl adipate, may be used as the liquid suspending medium for solid polymeric stabilizers based on copolymers of neopentyl(meth)acrylate.

The polymeric stabilizer when employed, can be a single type of polymer that bonds to the surface of the particles but also dissolves in the non-aqueous liquid or liquids of the liquid suspending medium. Alternatively, there may be two or more polymeric stabilizers serving as a polymeric stabilizer system. For example, the particles can be coated with a first type of polymeric stabilizer such as nitrocellulose, which in effect, provides a plain surface coating for the particles and one or more additional types of polymeric stabilizer that bond to or associate with the first type of polymeric stabilizer and also dissolve in the liquid suspending medium to provide dispersion and steric protection for the particles.

Preferably, to keep the particles in suspension, the liquid suspending medium may also comprise as the polymeric stabilizer an A-B type block polymer as disclosed in the United States patent application US-A-5 279 773 filed March 23, 1992, and in European Patent Publication 350,354. Nitrocellulose and/or other polymeric stabilizers may also be usefully provided in the liquid suspending medium in addition to the block polymer. It is preferred to use just enough A-B block polymer to maintain the particles in suspension, the amount to be used for a given light valve suspension being empirically determined, as is known. While the polymeric stabilizer is commonly a solid, such as a copolymer of neopentyl(meth)acrylate, and an unsaturated organic acid, the polymeric stabilizer may also be a liquid, such as a liquid copolymer of n-butylacrylate and maleic anhydride.

Usually, the amount of the polymeric stabilizer will be from about 1% to about 30%, such as from 5% to about 25%, by weight, based on the total weight of the liquid light valve suspension. However, while the use of a polymeric stabilizer is preferred, it need not be used in all cases.

The liquid light valve suspension and/or the film or light valve of the present invention may optionally also have therein other compatible materials, such as ultraviolet radiation absorbers, heat stabilizers and non-polymeric surfactants and dispersants, etc.

There are several ways in which a U.V. stabilizer may be incorporated into the film. For instance, the U.V. stabilizer may be dissolved in the swelling agent and so be introduced into the film. Or the U.V. stabilizer may be added to the concentrate before mixing with the matrix polymer. Or the U.V. stabilizer may be mixed with the polymer matrix. Or the U.V. stabilizer may be incorporated directly into the polymer matrix (by substituting, for example, U.V. absorber molecules for some of the methyl groups in the polydimethylsiloxane polymer or other such substitution in other matrix polymers). Or the U.V. absorber may be directly incorporated into the suspending polymer via derivatisation of a U.V. stabilizer to a reactive monomer, and subsequent co-polymerization to yield the suspending polymer.

### The Film And Its Manufacture

The liquid cross-linkable oligomer or polymer and the light valve suspension are chosen so that the components of one are compatible with the other. That is, neither will deleteriously affect the other. Moreover, the cross-linking agent used to form the cross-linked polymer matrix, the by-products of the cross-linking reaction, if any, and the cross-linking conditions, e.g. temperature, pressure etc., must also be compatible with and not adversely affect the cross-linkable oligomer or polymer, the cross-linked polymer matrix and/or the light valve suspension. For example, if the particles are heat-sensitive, the cross-linking reaction must take place at a temperature at which the particles are stable. If the particles are adversely affected by water, the by-products of the cross-linking reaction must be non-aqueous.

Useful liquid cross-linkable oligomers and polymers include liquid cross-linkable polyorganosiloxanes; polybutadienes, polyolefins, silicone gums, polyacrylamides and the like are also suitable but do not fall within the scope of this invention. The liquid cross-linkable oligomer or polymer may inherently have functional groups that enable it to be cross-linked, such as a polyacrylamide, or it may be a polymer that has been modified to include such functional groups, such as a dihydroxy terminated polydimethylsiloxane. Cross-linkable functional groups are known in the art and include hydroxy, carboxy, amine, amide, silane, and the like. The oligomer or polymer to be cross-linked may have two or more cross-linkable functional groups per molecule, and may even comprise a large number of such groups provided that the solubility requirements previously stated herein are met. Such cross-linkable functional groups may be located not only at or near the ends of the oligomer or polymer chain but also along the chain and may be substituted either directly to the chain or on groups pendant from the oligomer or polymer chain.

Appropriate cross-linking agents are those that will react with the cross-linkable functional groups, as is known, such as alkoxy silanes, alkyl orthotitanates and the like. one or both of the cross-linkable oligomer or polymer and the cross-linking agent must have a cross-linking functionality greater than two, as is known. The cross-linking reaction may also be a condensation between polyfunctional monomers that gives rise to a cross-linked polymer.

The present invention uses a cross-linkable polyorganosiloxane as the cross-linkable oligomer or polymer. Cross-linkable polyorganosiloxanes useful in the present invention are known or can be prepared by methods known in the art. Such liquid cross-linkable polyorganosiloxanes comprise repetitive units of silicon atoms linked to oxygen atoms, where the silicon atoms are substituted by one or usually two substituted or unsubstituted organic groups, and, of course, they also comprise cross-linkable functional groups. Useful organic groups include aliphatic, cycloaliphatic, aromatic, heterocyclic, aliphatic aromatic, aromatic aliphatic and the like. The organic group is preferably saturated aliphatic or aromatic. Most preferably, the organic group is alkyl, aryl, aralkyl or alkaryl.

The cross-linkable polyorganosiloxane oligomer or polymer may be a homopolymer, such as 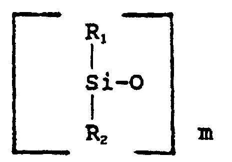 where R₁ and R₂ are the same or different organic groups, or a copolymer, such as a copolymer of the units 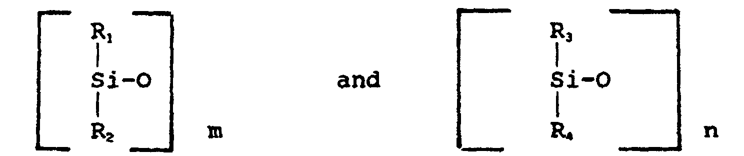 wherein at least one of R₁ - R₄ is a different organic group than the others. For examples R₁, R₂ and R₃ may be alkyl, preferably methyl, whereas R₄ is aryl or aralkyl, preferably phenyl.

Cross-linkable polyorganosiloxane oligomers or polymers are preferred for use in the present invention to provide the cross-linked polymer matrix for many reasons. The cross-linked polyorganosiloxanes have excellent oxidation and UV stability and are stable over a wide temperature range. Indeed, when some of the organic groups are aryl, such as phenyl, the temperature stability is increased. Because of the wide availability of polyorganosiloxanes and the ease with which they may be cross-linked and the absence of harmful by-products from the cross-linking reaction, these polymers are relatively inexpensive to make and use.

Moreover, a cross-linked polyorganosiloxane polymer matrix is compatible with a broad range of particles, liquids and polymeric stabilizers used in light valve suspensions. Equally important, the cross-linked polyorganosiloxane polymer matrix provides the film with a high dielectric strength, which allows for the use of large voltages across the light valve cell without arcing.

It is presently preferred to use a liquid cross-linkable polydimethyl siloxane oligomer or polymer and a multifunctional alkoxy silane cross-linking agent, primarily for reasons of convenience and economics.

The cross-linked polyorganosiloxane polymer is conveniently prepared by the cross-linking reaction between a high weight average molecular weight (about Mw 110,000 - about 150,000) liquid dihydroxy-terminated linear polydimethylsiloxane and a tri-or tetra- alkoxy silane. If the organosiloxane copolymer emulsifier described hereinafter is used, lower weight average molecular weight polyorganosiloxane oligomers or polymers can be used, such as from about Mw 13,000 or more. The cross-linking reaction may be catalyzed by metal salts of organic acids (e.g. tin octoate, ferric octoate, dibutyl tin dilaurate, etc.) at room temperature. The amount and type of catalyst and/or cross-linking agent can be varied to change both the rate of cross-linking of the polymer matrix and the properties of the resulting cross-linked polymer matrix.

The film of the invention may be prepared by mixing together a liquid cross-linkable oligomer or polymer, cross-linking agent, catalyst, if any, and liquid light valve suspension, and are preferably emulsified, to form a multitude of droplets of light valve suspension in the liquid cross-linkable polymer. The emulsion can then be cast as a film and allowed to cure, thus yielding a film containing encapsulated droplets of the liquid light valve suspension. Alternatively, a semi-solid system comprising the cross-linkable materials can be mixed with the liquid light valve suspension and then cast as a film arid cured.

### Copolymer Emulsifier Used To Make The Film

While it is possible to form an emulsion of the cross-linkable oligomer or polymer and the light valve suspension by mechanical means, it is preferable to use an emulsifier to obtain a more stable emulsion. The emulsifier is preferably a copolymer of an organosiloxane and a copolymerizable organic monomer. The polyorganosiloxane moiety will be soluble in the liquid cross-linkable polyorganosiloxane oligomer or polymer used to form the polymer matrix, while the polymerized organic monomer will be soluble in the liquid light valve suspension. Most preferably, the copolymer of the organosiloxane/organic monomer is an AB block copolymer, although ABA block copolymers can also be used. Random copolymers or A-B-A-B copolymers are not likely to be as effective. It is presently preferred to provide the organosiloxane/organic monomer copolymer with a weight average molecular weight of from about 20,000 to about 2,000,000, most preferably from about 30,000 to about 80,000.

The use of the copolymer emulsifier with the cross-linkable polyorganosiloxane oligomer or polymer provides several advantages over emulsification by mechanical means. Thus, the copolymer emulsifier provides an emulsion of improved stability using a lower Mw cross-linkable polyorganosiloxane oligomer or polymer, which leads to improved films and easier processing. Moreover, the copolymer emulsifier ensures that each droplet of light valve suspension will be surrounded by the polyorganosiloxane polymer matrix, thus avoiding bleeding of light valve suspension from imperfectly enclosed droplets. The copolymer emulsifier also prevents coalescence of the droplets, which enables the production of smaller capsules and a smaller size distribution of the capsules. In addition, a higher ratio of liquid light valve suspension to polyorganosiloxane matrix polymer can be obtained without phase reversal (i.e. capsules of polyorganosiloxane in a suspension matrix), which enables the production of a darker, more homogeneous film.

Organosiloxane copolymers useful as the copolymer emulsifier are known or can be prepared by methods known in the art. Typical block copolymers include copolymers of organosiloxanes and polyacrylates, polymethacrylates, polyethers, polymethylstyrenes, alkyd resins, polyamides, polyurethanes, polycarbonates, epoxy resins and the like. Typical methods of preparation include copolymerizing a polyorganosiloxane terminated at one or both ends with a polymerizable vinyl group with a copolymerizable organic monomer or condensing a polyorganosiloxane prepolymer having a reactive group with an organic polymer having a complementary reactive group and the like. To facilitate the production of the block copolymer, the copolymerizable polyorganosiloxane prepolymer can be treated with an initiator before reaction with the comonomer or group transfer techniques or other suitable copolymerization methods can be used.

It is presently preferred to form the copolymer emulsifier from methacryloxypropyl- or acryloxypropyl- terminated polydimethylsiloxane prepolymers, because of their ease of manufacture and/or their commercial availability. Presently, it is preferred to use an acrylate or methacrylate as the comonomer, but other organic comonomers could be used, such as fumarates, maleates, and the like. In general, the polymerized organic comonomer moiety will be selected to be compatible with and soluble in the liquid light valve suspension.

### Reduction Of Haze In The Film

Light valves of the prior art described in many of the above mentioned patents, e.g., U.S. Patent 4,407,565, which use light-absorbing particles, exhibit excellent optical clarity and scatter very little light even though the index of refraction nₒ of the liquid suspending medium of their liquid light valve suspensions is far less than the index of refraction of the electrode material. For example, the index of refraction of one commonly used electrode material, indium tin oxide, is about 2.0 (although it can be somewhat higher or lower depending on layer thickness), whereas the index of refraction, n_{D}, for the liquid suspending medium will fall in the range of 1.33-1.68 and is usually in the range of about 1.38-1.56. Likewise n_{D} for the liquid suspending medium can be substantially lower or higher than that of the glass sheets usually used as the walls of the light valve. The refractive index of glass varies according to the composition of the glass but is commonly about 1.52.

Although some light is lost in a light valve by absorption in or by reflection from the electrodes and walls, as discussed above, no objectionable light scatter is normally caused by them despite the fact that their refractive indices usually differ substantially from that of the liquid suspending medium. Hence, the refractive indices of the walls and electrodes of the light valve can be ignored in seeking to substitute for the liquid light valve suspension in a light valve a working material in the form of a film of the present invention comprising droplets of liquid light valve suspension in a cross-linked polymer matrix that will exhibit excellent optical clarity.

Most preferably, however, the film prepared from the cross-linked polymer matrix is allowed to absorb a suitable organic liquid, which has a multiple effect. Firstly the film swells and light scatter is substantially reduced. Secondly the droplets of suspension encapsulated within the cross-linked polymer matrix appear to absorb the liquid and swell. This "dilution" of the suspension produces a marked decrease in the decay time (by a factor of up to 600) of the film when exposed to an applied electric field. Thirdly the electrical response of the swollen, cross-linked film with respect to frequency and voltage is greatly improved. Swollen films can be driven at a frequency as low as 25 Hertz or less.

Liquids that can be used to swell the film include but are not limited to aliphatic hydrocarbons, halocarbons, esters, ethers, alcohols, aromatic hydrocarbons, aromatic esters, etc. Suitable liquids include: isopentyl acetate, hexyl acetate, octyl acetate, decyl acetate, butyl butyrate, isopropyl butyrate, neopentyl neopentanoate and many other simple aliphatic esters. Other useful liquids include hexane, heptane, 3-methyl decane, 3,6-dimethyl octane and other straight or branched chain aliphatic hydrocarbons. Further useful liquids include aromatic hydrocarbons, such as benzene, toluene, xylene and the like, cycloaliphatic hydrocarbons and halogenated or perhalogenated hydrocarbons, such as perfluoro - and/or perfluoro/perchloro hydrocarbons.

Suitable liquids will have the following characteristics:
(1) the liquid is absorbed by the cross-linked polymer matrix; and
(2) the liquid is a solvent for the nitrocellulose and/or other polymeric stabilizer that may be used.

### DESCRIPTION OF THE DRAWINGS

The present invention is illustrated in terms of preferred embodiments by reference to the accompanying drawings in which:
Figs. 1 and Fig. 2 are cross-sectional views of ohmic and capacitive type prior art light valves incorporating a liquid light valve suspension;
Figs. 3 and 4 illustrate the closed (off, unactivated or dark) and open (on, activated, or light-transmitting) states of one type of liquid light valve suspension in a prior art light valve;
Fig. 5 is a fragmentary, cross-sectional schematic illustration of a transparent plastic film containing microdroplets of the liquid light valve suspension dispersed therein without protective layers;
Fig. 5A is a view similar to Fig. 5 of another embodiment of the invention;
Fig. 6 is a fragmentary, cross-sectional schematic illustration of one embodiment of the film of the invention with protective layers;
Fig. 7 is a fragmentary, cross-sectional schematic illustration of a second embodiment of the film of the invention with protective layers;
Fig. 8 is a fragmentary, cross-sectional schematic illustration of a third embodiment of the film of the invention with protective layers and enclosed within hard relatively rigid substrates; and
Figs. 9a and 9b illustrate the closed and open states of one type of the film of an embodiment of the present invention.

### Detailed Description Of The Invention

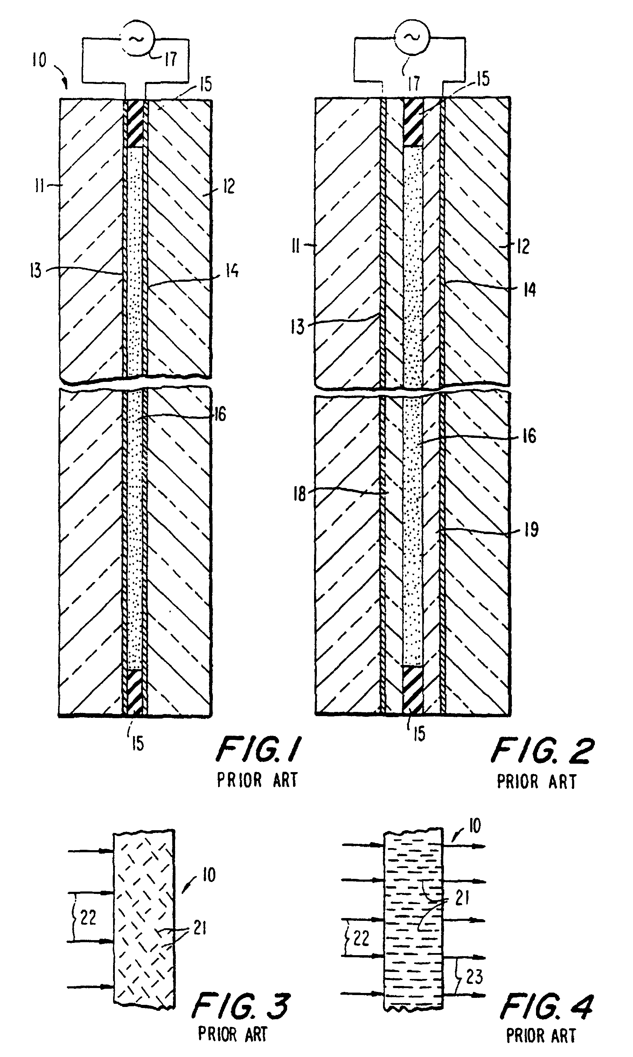

Referring to Fig. 1 a prior art light valve generally indicated as 10 is formed of two sheets of glass 11 and 12 having transparent conductive coatings 13 and 14 on the inner surfaces thereof. The conductive coatings 13, 14 form area electrodes for the application of energizing voltage to the cell 10. The glass plates 11, 12 are separated by a spacer 15 sealed to the glass plates around the edges thereof to provide a chamber 16 therebetween in which the light valve suspension of particles is placed. Once the light valve suspension has been introduced, the cell 10 is sealed. The conductive coatings 13 and 14 are connected to an AC power supply 17. Inasmuch as the light valve suspension in chamber 16 is in contact with conductive coatings 13 and 14 this may be termed an ohmic type cell.

Fig. 2 is similar to Fig. 1 and corresponding parts are similarly designated. However, in Fig. 2 thin transparent substantially nonconductive coatings 18 and 19, (for example silicon monoxide, silicon dioxide, aluminum oxide, titanium dioxide or polyimide) are placed over the area electrodes 13 and 14 so that the conductive coatings are protected from the light valve suspension. Since layers 18 and 19 are of dielectric material, the electrodes are, in effect, capacitively coupled to the fluid suspension in chamber 16.

Fig. 3 schematically shows the closed off or dark condition of the cell 10. Here tiny acicular particles 21 are illustrated in random orientation. A beam of light impinging on cell 10, indicated by arrows 22, is absorbed, and if there is a sufficient concentration of particles in the suspension the cell can appear substantially opaque.

Fig. 4 schematically shows the open or light transmitting condition of the cell 10. Here, due to the application of an electric field, the particles 21 are aligned with their major axes perpendicular to the wall faces. In this condition, the particles intercept much less light than in the random state shown in Fig. 3. Consequently a considerable portion of the beam of light 22 passes through the cell, as indicated by the arrows 23.

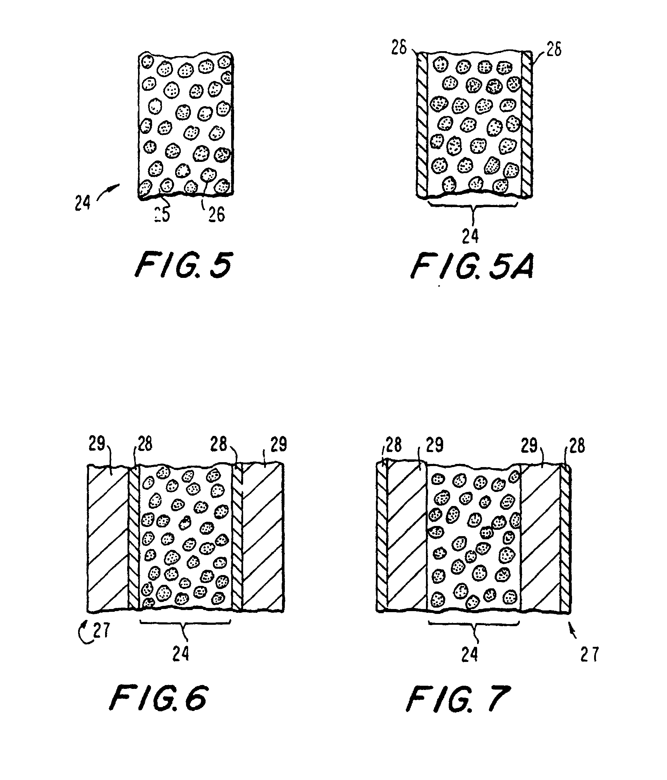

Fig. 5 shows a film 24, comprising a cross-linked polymeric matrix material in the form of a transparent plastic 25 within which is distributed, a plurality of dark droplets of liquid light valve suspension 26. The globules are dark because the particles within them are strongly light-absorbing.

Fig. 5A shows electrodes 28 coated on both sides of film 24.

Fig. 6 shows protective layers 29 and an electrode 28 placed on both sides of the film 24. In this embodiment the electrodes 28 are on the inner surfaces of the protective layers 29 and in contact with the film 24. Dielectric overcoatings (not shown) could be placed over the electrodes if desired. The protective layers 29 and electrodes 28 in this embodiment are permanently secured to the film 24.

Fig. 7 illustrates a second embodiment of the film 27 in which protective layers 29, which have an electrode 28 on one side of each protective layer, are again placed on both sides of the film 24. However, unlike the embodiment shown in Fig. 6, in this embodiment the electrodes are on the outer surfaces of the protective layers 29, and are not in contact with the film 24. Again, the protective layers and electrodes in this embodiment are permanently secured to the film. Thus, in Fig. 6, the electrodes 28 may be coated over the film 24 using known techniques for coating electrodes on glass cell walls, while protective layers 29 may be coated over the electrodes 28, also using known techniques. In Fig. 7, the relationship of electrodes 28 and protective layers 29 is reversed.

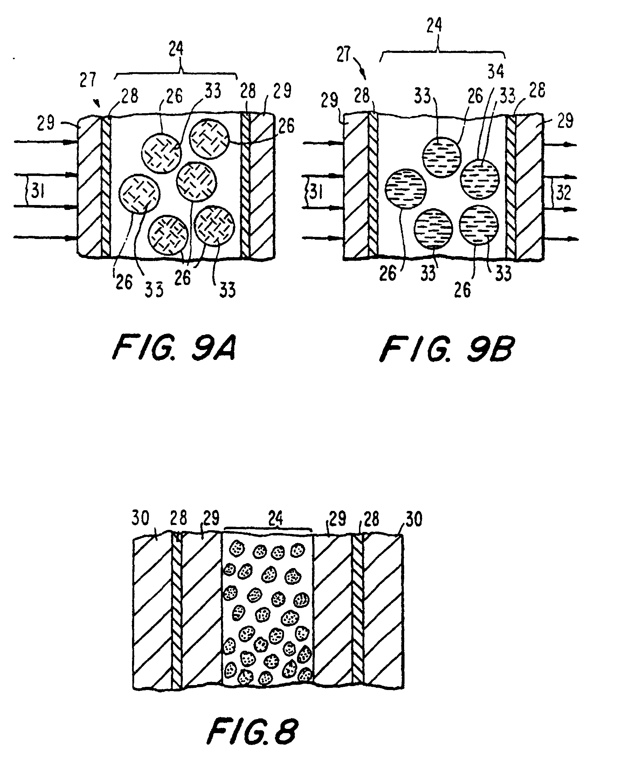

Fig. 8 shows a film 24 having protective layers 29 secured thereto. In this embodiment the film 24 is enclosed within hard rigid substrates 30. Electrodes 28 may be carried by the substrates 30 and face the protective layers 29.

It is presently preferred that the electrode 28 and protective layer 29 be in the form of a prefabricated assembly. In this embodiment, the electrode 28 and protective layer 29 shown in Figs. 6-8 can be provided by a film 29, such as a plastic film, that has been coated with an electrode 28 before application of the assembly to the film 24.

The hard rigid substrates 30 can be transparent materials, such as glass or plastic, such as polyethylene terephthalate or polycarbonate. For many applications of a light valve such as variable transmission windows, filters and eyewear, and backlit displays, it is desirable that both substrates be transparent. For such use in the present invention, the electrodes should also be made of transparent material, e.g., thin layers of tin oxide, indium tin oxide (hereinafter "ITO") or of conductive metals such as gold. For other applications such as mirrors and reflective displays it may only be desirable for one substrate and the electrode deposited thereon to be transparent, whereas the second substrate and/or electrode deposited on it can be made of specularly reflective material such as metal; the second substrate could also be made of a ceramic material with a transparent or reflective electrode thereon. Where diffuse rather than specular reflection is desired as in certain types of displays the rear electrodes can be overcoated with a diffuse white layer by any of various methods known in the art. See, for example U.S. Patent Nos. 4,643,525 and 4,648,691.

In Fig. 9a a beam of light 31 impinges on a film 24 of the present invention. It is assumed that no potential difference, i.e., electric field, exists between the electrodes 28. Hence the particles 33 dispersed within the microdroplets 26 of the liquid suspension are in random positions due to Brownian Movement. Because the particles absorb light, a beam of light 31 impinging on the film is absorbed by particles 33 within the microdroplets 26. Fig. 9b assumes that an electric field (not shown) exists between the electrodes 28. As a result the particles 33 align within the microdroplets 26 and a considerable portion of the beam of light 31 passes through the film as indicated by the arrows 32.

Electrodes for use in light valves and methods of depositing electrodes on glass and plastic substrates are well known in the art. For example, see U.S. Patent Nos. 3,512,876 and 3,708,219 which disclose use of electrodes in light valves, and see U.S. Patent Nos. 2,628,927, 2,740,732, 3,001,901 and 3,020,376 which disclose articles having conductive and especially conductive transparent coatings on glass and plastic substrates and methods of forming or depositing such coatings.

As used herein the term "electrode" shall be understood to mean not only electrically conductive metal oxide and other coatings used in the art for such purpose but also such coatings which have dielectric overcoatings on them of materials such as silicon monoxide or dioxide, titanium dioxide, aluminum oxide, tantalum pentoxide, magnesium fluoride, etc. The electrodes may cover all or part of the substrate on which they are located and may also be applied in patterns. For example, in a light valve functioning as a variable light transmission window or filter for which one would usually wish to vary the amount of light passing through the entire active area of the device. On the other hand, if the light valve were intended to be used as a display device the electrodes would normally be deposited in patterns in discrete areas of the substrate. The term "electrode" as used herein also comprises use of semiconductor films and plural film layers, both transparent and colored, such as are used in active matrix addressed display devices. In all cases where the film of the present invention is used in a light valve device it is assumed that there are appropriate electrical connections leading to a power supply suitable to operate the device.

Although the usual type of liquid light valve suspension used in a light valve increases in light transmission when voltage is applied, it should be understood that the present invention also comprises light valves, films and liquid light valve suspensions which decrease in light transmission when a voltage is applied, as is disclosed in U.S. Patent 4,078,856, or which when activated increase the transmission of radiation in one part of the electromagnetic spectrum and decrease transmission in another part of the spectrum as is disclosed in U.S. Patent 3,743,382.

The film of the present invention can itself function as a light valve provided that it has electrodes on its surfaces or protective layers. However, if the film itself is to function as a light valve, electrodes should preferably be on the inside surface of each protective layer facing the interior part of the film to avoid being scratched and to minimize voltage required to activate the film. Also the external surfaces of the protective plastic layers may have thereon an ultraviolet absorbing lacquer filter such as the type sold by E.M. Chemicals of Hawthorne, N.Y. Numerous other clear surface coatings are commercially available to reduce abrasion and environmental attack especially on plastics. One such system is produced by The Silicone Products Division of General Electric Co., Waterford, N.Y., comprising a hard coating primer called SHP 200 plus SHC 1200 Silicone Hard Coating Resin. A radiation - curable clear coating that resists abrasion and ultraviolet degradation is sold by The Sherwin Williams Company of Chicago, Illinois under the name Permaclear UV.

The same types of surface coatings may be useful with other embodiments of the present invention, particularly where the film is sandwiched between hard plastic substrates such as polycarbonate.

The present invention is illustrated by the following Examples. All parts and percentages are by weight unless otherwise noted.

### Example 1

One gram of a viscous suspension consisting of 10% pyrazine-2,5-dicarboxylic acid calcium polyiodide (with a trace of SS type 1/4 second viscosity nitrocellulose), 24% of a 97%/3% random copolymer of neopentyl acrylate/methylol acrylamide (polymeric stabilizer), 30% tri-n-butyltrimellitate and 36% di-2-ethylhexyl adipate are combined with 2 grams of dihydroxy terminated polydimethyl siloxane (Mw 110,000), 0.06 grams of tetrabutylorthosilicate (tetra-butoxysilane) and 0.15 grams of dibutyltindilaurate.

The combined ingredients are emulsified (by stirring, ultrasonic agitation, etc.), degassed under vacuum to remove entrapped air and then spread on a glass plate to cure. After curing for several hours at room temperature or 1 hour at 85°C the film is ready.

The film is removed from the plate with a razor blade, allowed to freely absorb toluene and then placed between two conductive coated transparent substrates. Upon application of a suitable A.C. potential the film goes from the darkened to the transmissive state.

### Example 2

The toluene in Example 1 above is replaced by xylene (mixed isomers), with substantially the same result.

### Example 3

The toluene in Example 1 above is replaced by a mixed solvent comprising 50% xylenes and 50% n-hexyl acetate, with substantially the same result.

### Example 4

The toluene in Example 1 above is replaced by type 0.8 Halocarbon Oil, with substantially the same result.

### Example 5

The toluene in Example 1 above is replaced with n-heptane, with substantially the same result.

### Example 6

One gram of a viscous suspension consisting of 18.7% pyrazine-2,5-dicarboxylic acid calcium polyiodide (with a trace of SS type 1/4 second viscosity nitrocellulose), 25.1% of a graft copolymer made by reacting an A-B block copolymer of neopentyl/methacrylate/hydroxyethyl methacrylate (polymeric stabilizer) with maleic anhydride, and 56.2% tri-n-butyl trimellitate is combined with 1.5g dihydroxy terminated polydimethyl siloxane (Mw 150,000), 0.06g of tetrabutylorthosilicate (tetrabutoxysilane) and 0.15g of dibutyltindilaurate. The combined ingredients are emulsified (by stirring, ultrasonic agitation, etc.), degassed under vacuum to remove entrapped air and then spread on a glass plate to cure. After curing for several hours at room temperature or 1 hour at 85° the film is ready.

The film is removed from the plate with a razor blade, allowed to freely absorb type 0.8 Halocarbon Oil (manufactured by Halocarbon Products, Hackensack, New Jersey) and then placed between two conductive coated transparent substrates, which may be either glass or plastic e.g., polyethylene terephthalate.

Upon application of a suitable A.C. potential the non-light scattering film goes from the darkened to the transmissive state.

Films of the invention can operate at A.C. frequencies of 25 Hertz or higher with preferred frequencies in the range of 100 Hertz to 1 Kilohertz. Typical electric field strengths would be 12 volts per mil or higher but lower field strengths are possible when the liquid light valve suspension comprises large size particles. Films of the invention have been observed with decay times ranging from as low as about 25 ms to several seconds depending on the type and amount of the polymeric stabilizer, e.g., an AB block or random copolymer, used in the liquid suspension, and whether and how the film was swollen, e.g., with Halocarbon Oil or other liquids, after film formation.

A major further benefit of the films of the present invention is that agglomeration of the suspended particles is essentially completely eliminated when a voltage is applied because particle migration is severely restricted.

### Example 7

1 gram of final suspension comprising 3.5% 2,5-dicarboxypyrazine calcium polyiodide (with a trace of SS type 1/4 second viscosity nitrocellulose), 22% 86:14 random copolymer of tert-butylacrylate: maleic anhydride (polymeric stabilizer) and 74.5% tri-n-propyltrimellitate was combined with 1 gram of dihydroxy terminated polydimethyl siloxane (Mw 36,000) and stirred by hand. The resulting emulsion (100X magnification) consisted of bubbles of suspension in a matrix. To this was added 0.02 g of tetraphenyl orthosilicate as cross-linking agent, and 0.1g of dibutyl tin dilaurate as initiator. The resulting mass was stirred, then placed between two sheets of ITO coated glass (3 mil spacer) and clamped, then placed in the 85°C oven to accelerate the curing reaction, although this system will also cure at room temperature. After curing, the cell was energized and it functioned as a light valve by opening and closing. This Example illustrates the use of a non-swollen film.

### Example 8

A film was prepared by combining 2g of suspension of 5% 2,5-dicarboxypyrazine calcium polyiodide (with a trace of SS type 1/4 second viscosity nitrocellulose), 20% 98:2 copolymer of n-butylacrylate: maleic anhydride (liquid polymeric stabilizer) and 75% tri-n-butyltrimellitate with 4 grams of dihydroxyterminated polydimethylsiloxane (Mw = 110,000), 0.16 gram of tetrabutyl orthosilicate and 0.30g of dibutyltindilaurate. The mixture was stirred well and emulsified, degassed under vacuum and cast as a 4 mil film on a glass substrate. The film was placed in an 85°C oven for 1 hour to accelerate the cure. After curing, the film, which is light scattering and shows poor response to an electric field - slow decay time - at this stage, is stripped from the substrate with a razor blade. A piece of ITO coated glass is covered with a suitable liquid (e.g. hexyl acetate - see below) and the film is laid on top. More of the liquid is dropped onto the surface of the film and then another sheet of ITO coated glass is placed on top, the resulting cell is clamped and upon application of a signal (e.g. 10KHz, 100V RMS) the film is observed to be non-light scattering with good electrical response: high optical density ratio; fast decay time (<100 ms).

It is observed upon addition of a few drops of a suitable liquid, such as toluene, to the film that the film buckles and expands due to absorption of the liquid into the cross-linked polymer matrix. It is further observed that the individual globules of suspension show also an expansion or increase in volume. The increase in volume of the globules of suspension is accompanied by a sharp decrease in the decay time of the light valve suspension (from about 15 sec. down to 25 ms in one case). Absorption of the liquid into the film also modifies the index of refraction of the globules to the point where the index of refraction of the film is virtually identical to the index of refraction of the globules; thus the film is nearly non-light scattering.

### COMPARATIVE EXAMPLE 9

A film was prepared by combining 1g of dihydroxyterminated polybutadiene (Mw 6200) with 0.03g tetrabutylorthosilicate (cross-linker), 0.05g dibutyltindilaurate (catalyst) and 0.1g of silver metal (flake <10 microns). After mixing, the material was spread on a glass plate (film thickness 4 mil.) and cured for several hours at 85°C. After curing, the film was removed from the plate with a razor blade, then swollen with toluene and placed between two ITO coated substrates. Upon viewing the film under 100X magnification and applying a voltage (150V, 60HZ) a few of the silver particles were seen to orient.

### COMPARATIVE EXAMPLE 10

A film was prepared by combining 2 grams of a dihydroxyterminated polybutadiene (Mw 6,200) with 0.18g tolylene-2,4-diisocyanate (chain extender/terminal-functionalizer), 0.08g of glycerol (cross-linker), 0.01g of dibutyltindilaurate (catalyst) and 0.1g of graphite (synthetic). After mixing, the material was spread on a glass plate (4 mil. film) and allowed to cure for several hours at 85°C. This system will also cure at room temperature. After curing, the resultant film was swollen with toluene, then removed from the glass plate with a razor blade and placed between two ITO coated substrates. Upon viewing the film under 100x magnification and applying a voltage (150V, 60 Hz) several of the graphite particles were seen to orient.

### COMPARATIVE EXAMPLE 11

A film was prepared by combining 1g of dihydroxyterminated polybutadiene (Mw 6200) with 0.2g of light-polarizing crystals of tetraphenyl cyclopentadienone and mixing. Then 0.1g of tetrabutylorthotitanate (cross-linker) was added and stirred. The tetrabutylorthotitanate cross-linked the polymer within seconds, without the addition of a catalyst. The resulting elastomer was swollen with xylene (mixed isomers) and placed between two ITO coated substrates, spacing 3 mil. During examination under 100x magnification and application of a voltage (150V, 60Hz) several of the particles were observed to orient.

In Comparative Examples 9-11, before the film is swollen with the liquid, the particles are embedded in or surrounded by the matrix polymer. After swelling, the film contains a liquid light valve suspension of individual particles in capsules distributed within the matrix polymer. Because the particles are thus individually encapsulated, the use of a protective polymer to prevent agglomeration and/or settling of the particles is not required.

### COMPARATIVE EXAMPLE 12

A film was prepared by combining 2 grams of dihydroxyterminated polybutadiene (Mw 6,200) with 0.06g of tetrabutyl orthosilicate (cross-linker), 0.1g of dibutyltindilaurate (catalyst) and 1 gram of a suspension consisting of 10% pyrazine-2,5-dicarboxylic acid calcium polyiodide (with a trace of SS type 1/4 second viscosity nitrocellulose), 30% tributyltrimellitate, 36% dioctyl adipate and 24% a 97:3 random copolymer of neopentyl acrylate/N-methylol acrylamide. The mixture was stirred and emulsified and spread on a glass plate (film thickness 4 mil.) and allowed to cure for several hours at 85°C. After curing, the film was removed from the plate with a razor blade, then swollen with toluene and placed between two ITO coated substrates. When viewed under 100x magnification and upon the application of a suitable voltage (140V, 60Hz) the encapsulated particles were clearly seen to orient to a transmissive state.

### COMPARATIVE EXAMPLE 13

A film was prepared by adding a few drops of concentrate consisting of 18.27% pyrazine-2,5-dicarboxylic acid calcium polyiodide, 26.89%, poly (n-butyl acrylate-co-maleic anhydride polymer (98:2) 54.83%, tri-n-butyltrimellitate to about 1g of Norland Optical Adhesive 61 (Norland Products Inc., 695 Joyce Kilmer Avenue, New Brunswick, NJ) and stirring. Norland Optical Adhesive 61 is a U.V. curable adhesive derived from a urethane-based polyene, a mercaptan ester and a methacrylic monomer. The material thus produced was spread on a glass plate and exposed to U.V. light for 10 minutes. After curing, the film was stripped from the plate with a razor blade and a portion was immersed in hexyl acetate and ultrasonically probed for 6 minutes. After probing, the film was placed between two ITO coated substrates. Under 100x magnification, it was clearly observed that the suspended particles were indeed encapsulated. There was a certain amount of degradation of the encapsulated suspension as evidenced by a color change of same from blue to red. However, the light polarizing properties of the crystals were retained. It was further observed that upon application of a voltage (100V, 10KHz) the particles oriented and the encapsulated droplets changed from dark red to a light yellow color.

### EXAMPLE 14

A film was prepared by combining the following: 2 grams of dihydroxyterminated polydimethylsiloxane (Mw 36,000), 0.27g of a 90/10 block copolymer of polydimethylsiloxane-co-methylmethacrylate (Mw 100,000, Mn 60,000), one gram of concentrate (consisting of about 15% pyrazine-2,5-dicarboxylic acid calcium polyiodide with a trace of SS type 1/4 sec. nitrocellulose, 25% polyneopentylacrylate-block-hydroxyethylmethacrylate-graft-maleic anhydride polymer, 60% tri-n-butyltrimellitate), 0.15g of dibutyltindilaurate and 0.14g of tetrabutylorthosilicate. The components were combined in the order indicated and mixed with a high speed homogenizer after each addition. A very smooth, very stable emulsion resulted with an average capsule size of about 1 micrometer. After mixing, the emulsion was degassed under vacuum and spread on a glass plate (4 mil. layer) then cured at 85°C for about 1 hour. The film was stripped from the plate with a razor blade.

After swelling with isopentylacetate and ultrasonic probing (power at 3,6 min) the film was place between two ITO plates and a voltage applied (100V, 10 KHz), the particles oriented and the film became virtually transparent.

### EXAMPLE 15

A copolymer emulsifier was prepared using a group transfer reaction as follows. Hexamethyl cyclotrisiloxane (200g) was dissolved in an equal amount of toluene and passed thought neutral alumina. To this was added 1.2 cc of 1.3 N n-butylithium and the mixture was stirred for five minutes, whereafter 2 cc of dimethylsulfoxide was added. After five hours, the reaction was terminated with 1.0 cc methacryloxypropyl dimethylchlorosilane. The methacryloxypropyl terminated polydimethyl siloxane oligomer thus formed (Mw 110,000) was precipitated in methanol and dried in a vacuum oven at 50°C for twenty-four hours.

Fifty grams of the methacryloxypropyl terminated polydimethyl siloxane oligomer was placed in a 250 ml flask, to which was added 8g of neopentyl methacrylate through neutral alumina and 50 cc. tetrahydrofuran (THF) and 0.5 cc methyl trimethylsilyl dimethyl ketone acetal (MTDK acetal). The mixture was stirred for ten minutes after which tris(dimethylamino)sulfur(trimethylsilyl)difluoride was added dropwise as a 5% solution in acetonitrile. The addition was discontinued after reaching the reaction exotherm. The solution turned cloudy. The product, which appeared elastomeric, was an A-B copolymer of polydimethylsiloxane and poly(neopentyl methacrylate) (Mw 131,000 - Mn 23,000).

### EXAMPLE 16

A film was prepared by combining 0.5g of a suspension consisting of 20% 2,5-dicarboxypyrazine calcium polyiodide, 20% of a neopentylmethacrylate-block-hydroxyethyl methacrylate copolymer and 60% tri-n-propyltrimellitate with 2 grams of dihydroxyterminated polydimethylsiloxane (Mw 150,000) (matrix), 0.1 gram of the block copolymer of Example 15 (emulsifier), 0.08 gram of tetrabutylorthosilicate (cross-linker) and 0.1 gram of dibutyltindilaurate (catalyst). The mixture was stirred with a high speed homogenizer and degassed under vacuum after each addition. After stirring and a final degassing the mixture was spread on a glass plate in a 2 mil layer and allowed to cure for one hour at 85°C. After curing and removal from the plate with a suitable blade, the now cross-linked film was dropped onto a layer of 2,6-dimethyloctane on an ITO coated substrate and swelled. A second substrate was placed over the first and a voltage applied (100V, 60Hz) and the film was observed to go from the darkened to the transmissive state with little or no light scatter.

### EXAMPLE 17

Following the procedure of Example 15, a polydimethylsiloxane oligomer terminated with methacryloxypropyl was prepared. (Mw 17,900 - Mn 13,900).

Forty-five grams of the methacryloxypropyl terminated polydimethylsiloxane oligomer was placed in a 250 ml flask and dried in a vacuum oven at 50°C overnight. Through the flask was added 0.5 cc MTDK acetal, and 50 cc THF, and the mixture stirred for thirty minutes. Thereafter, 15g N-butylmethacrylate was added followed by the dropwise addition of tris(dimethylamino)sulfur(trimethylsilyl)-difluoride as a 5% solution in acetonitrile. The dropwise addition was continued until the reaction exotherm was observed. The solution turned milk white and the copolymer was precipitated in methanol, and dried in a vacuum of at 50°C overnight. An A-B block copolymer of dimethylsiloxane/n-butylmethacrylate was recovered. (Mw 68,000 - Mn 19,500).

### EXAMPLE 18

An A-B-A block copolymer of polydimethyl siloxane (B)-co- n-butyl acrylate (A) was prepared by combining (in a 3 neck, 250 ml round bottom flask equipped with condenser, thermometer, addition funnel, heating mantle and teflon coated magnetic stirrer) 19.9g of methacryloxy-propyl terminated polydimethylsiloxane (Mw 33,000) and 80.5g of hexyl acetate. The solution was heated to reflux (about 170°C) with stirring and then a solution consisting of 5g of n-butyl acrylate monomer, 0.21g of tert.-butyl peroxybenzoate and log of hexyl acetate was added (via the addition funnel) over a 20 minute period. After the addition was complete the reaction solution was allowed to reflux for a further one hour and 40 minutes. After the reaction was complete, the solvent was removed by heating the mixture to boiling in a petri dish on a hot plate. The devolatilized material was a hazy viscous liquid and constituted the A-B-A copolymer emulsifier (Mw 41,000).

The copolymer emulsifier produced by this Example is useful in the production of a light valve film according to the present invention, for example by replacing the copolymer emulsifier of Example 16 with the copolymer emulsifier of this Example.

### COMPARATIVE EXAMPLE 19

0.5g of a concentrate (consisting of 20% 2,5-dicarboxy pyrazine calcium polyiodide, 20% neopentylmethacrylate-hydroxyethylmethacrylate block copolymer, 60% tri-n-propyltrimellitate was combined with 2.0g of General Electric Silicone II caulking compound (clear). The combined mass was mixed with a high speed homogenizer, spread in a layer 4 mils thick on a flexible mylar substrate and allowed to cure by standing at ambient conditions for about 24 hours. Thereafter, a piece of the film/mylar sandwich was cut out with scissors and dropped film side down onto a conductive coated substrate covered with a layer of hexyl acetate. The film began to immediately swell and buckle away from the mylar backing and, after several seconds the mylar was simply removed as the film had completely separated. A second conductive coated substrate was then placed on top of the swollen film and upon application of a suitable voltage the film was observed to go from the dark to the transmissive state.

G.E. Silicone II is a moisture-curable RTV silicone elastomer which is cured and cross-linked through hydrolysis on contact with moisture in the air.

Other moisture-curable RTV's cross-link through the condensation of silanol groups with enoxy, oxime or amine groups and can also be used to produce films useful in the invention.

The formation of the film on a flexible plastic substrate (e.g. mylar) permits the film to be manipulated with greater ease than if it were cast on a rigid substrate such as glass. For example, after the film is made on a flexible substrate it can be cut into suitable shapes and sizes preparatory to swelling with an almost unlimited degree of freedom, whereas the same film formed on a glass substrate cannot be so manipulated or only with great difficulty and with more defects (cuts, tears, holes) introduced into the film.

### COMPARATIVE EXAMPLE 20

The film of Comparative Example 19 was swollen with 3,6-dimethyloctane and subjected to ultrasonic agitation. The swollen film was then placed between two conductive coated plates (ITO) and a voltage (100V AC, 100Hz), applied, whereupon the film was observed to change from the dark to the transmissive state. While there was some degradation of the polarizing crystals due to reaction with either H₂O and/or CH₃CO₂H, this curing system should still be usable with particles that are stable with respect to H₂O and/or CH₃CO₂H.

## Claims

1. A film suitable for use as the light-modulating unit of a light valve, comprising a cross-linked polymer matrix (25) having distributed therein and in direct contact therewith,
droplets (26) of a liquid light valve suspension,
the liquid light valve suspension (26) comprising particles suspended in a liquid suspending medium,
**characterized in that**
the cross-linked polymer matrix (25) is a cross-linked polyorganosiloxane polymer matrix.

2. The film according to claim 1, wherein said cross-linked polyorganosiloxane polymer is a polyorganosiloxane homopolymer or copolymer.

3. The film according to claim 1, wherein said cross-linked polyorganosiloxane polymer is a cross-linked polydimethylsiloxane polymer.

4. The film according to claim 2 wherein said cross-linked polyoganosiloxane polymer is a cross-linked polyorganosiloxane copolymer of a polydimethylsiloxane and a polyalkylphenylsiloxane.

5. The film according to claim 1, wherein the liquid suspending medium is electrically resistive and has a polymeric stabilizer dissolved therein that prevents agglomeration of said particles.

6. The film according to claim 1, wherein the particles are organic particles.

7. The film according to any one of the preceding claims, wherein said suspension is in the form of droplets that are substantially disconnected one from another.

8. The film according to any one of the preceding claims wherein an electrode is in contact with each surface of the film.

9. The film according to any one of the preceding claims wherein an electrode is in contact with each surface of the film and a protective layer is in contact with the outer surface of each of said electrodes.

10. The film according to any one of claim 1-7 wherein a protective layer is in contact with each surface of the film and an electrode is in contact with the outer surface of each of the protective layers.

11. The film according to any one of the preceding claims wherein said particles are light polarizing.

12. The film according to any one of the preceding claims wherein said film, while in its cured, cross-linked form, has been swollen with a liquid applied to the surface thereof to form a liquid-swollen film that is less light-scattering as compared to said film prior to being swollen with said liquid.

13. The film according to claim 12, wherein the film is swollen with a liquid selected from liquid aliphatic ester, ether, straight or branched chain aliphatic, cycloaliphatic or aromatic hydrocarbon and halogenated or perhalogenated hydrocarbon.

14. The film according to claim 12, wherein the film is swollen with liquid toluene or xylene, or a liquid, low molecular weight fluorocarbon polymer having a specific gravity of at least 1.5 and having at least about 50 % of its atoms constituted by halogen atoms, at least 60 % of the halogen atoms being fluorine and the balance chlorine and/or bromine.

15. The film according to any one of the preceding claims, wherein the index of refraction of the film is substantially identical to that of the droplets.

16. A method of preparing the film according to claim 1, 2, 3 or 4 which comprises admixing a cross-linkable polyorganosiloxane oligomer or polymer, a liquid light valve suspension comprising particles suspended in a liquid suspending medium and a copolymer of an organosiloxane and a copolymerizable organic monomer as emulsifier, emulsifying the resulting admixture to form an emulsion of said liquid light valve suspension in said cross-linkable liquid polyorganosiloxane oligomer or polymer and cross-linking said cross-linkable liquid polyorganosiloxane oligomer or polymer while said admixture is in the form of a thin layer of said emulsion.

17. The method of claim 16 wherein said particles are organic particles.

18. A light valve having opposed cell walls, between which a film according to any one of claims 1-15 is arranged to form the light modulating unit of the light valve.

## Patentansprüche

1. Folie, die für die Verwendung als lichtmodulierende Einheit eines Lichtventils geeignet ist und die eine Matrix (25) aus einem vernetzten Polymer aufweist, die darin verteilt und in direktem Kontakt damit Tropfen (26) einer flüssigen Suspension eines Lichtventils aufweist,
wobei die flüssige Suspension (26) des Lichtventils Partikel aufweist, die in einem flüssigen Suspensionsmittel suspendiert sind,
**dadurch gekennzeichnet,**
**daß** die Matrix (25) aus dem vernetzten Polymer eine Matrix aus einem vernetzten Polyorganosiloxan-Polymer ist.

2. Folie nach Anspruch 1,
wobei das vernetzte Polyorganoslloxan-Polymer ein Polyorganosiloxan-Homopolymer oder -Copolymer ist.

3. Folie nach Anspruch 1,
wobei das vernetzte Polyorganosiloxan-Polymer ein vernetztes Polydimethylsiloxan-Polymer ist.

4. Folie nach Anspruch 2,
wobei das vernetzte Polyorganosiloxan-Polymer ein vernetztes Polyorganosiloxan-Copolymer aus einem Polydimethylsiloxan und einem Polyalkylphenylsiloxan ist.

5. Folie nach Anspruch 1,
wobei das flüssige Suspensionsmittel einen elektrischen Widerstand hat und einen darin gelösten polymeren Stabilisator aufweist, der eine Agglomeration der Partikel verhindert.

6. Folie nach Anspruch 1,
wobei die Partikel organische Partikel sind.

7. Folie nach einem der vorstehenden Ansprüche,
wobei die Suspension in Form von Tropfen vorliegt, die im wesentlichen voneinander getrennt sind.

8. Folie nach einem der vorstehenden Ansprüche,
wobei mit jeder Oberfläche der Folie eine Elektrode in Kontakt steht.

9. Folie nach einem der vorstehenden Ansprüche,
wobei mit jeder Oberfläche der Folie eine Elektrode in Kontakt steht und mit der äußeren Oberfläche jeder Elektrode eine Schutzschicht in Kontakt steht.

10. Folie nach einem der Ansprüche 1 bis 7,
wobei mit jeder Oberfläche der Folie eine Schutzschicht in Kontakt steht und mit der äußeren Oberfläche jeder Schutzschicht eine Elektrode in Kontakt steht.

11. Folie nach einem der vorstehenden Ansprüche,
wobei die Partikel das Licht polarisieren.

12. Folie nach einem der vorstehenden Ansprüche,
wobei die Folie in ihrer gehärteten, vernetzten Form mit einer Flüssigkeit gequollen ist, die auf ihre Oberfläche aufgetragen worden ist, um eine mit einer Flüssigkeit gequollene Folie zu erzeugen, die im Vergleich mit der Folie vor dem Quellen mit der Flüssigkeit weniger lichtstreuend ist.

13. Folie nach Anspruch 12,
wobei die Folie mit einer Flüssigkeit gequollen ist, die aus einem flüssigen aliphatischen Ester, Ether, geradkettigen oder verzweigten aliphatischen, cycloaliphatischen oder aromatischen Kohlenwasserstoff und halogenierten oder perhalogenierten Kohlenwasserstoff ausgewählt ist.

14. Folie nach Anspruch 12,
wobei die Folie mit flüssigem Toluol oder Xylol oder einem flüssigen Fluorkohlenstoffpolymer mit einem geringen Molekulargewicht gequollen ist, das ein spezifisches Gewicht von mindestens 1,5 hat und bei dem mindestens etwa 50 % seiner Atome Halogenatome sind, wobei mindestens 60 % der Halogenatome Fluor sind und der Rest Chlor und/oder Brom ist.

15. Folie nach einem der vorstehenden Ansprüche,
wobei der Brechungsindex der Folie mit dem der Tropfen im wesentlichen identisch ist.

16. Verfahren zum Herstellen einer Folie nach Anspruch 1, 2, 3 oder 4,
das folgende Schritte aufweist:
Vermischen eines vernetzbaren Polyorganosiloxan-Oligomers oder -Polymers, einer flüssigen Suspension eines Lichtventils, die in einem flüssigen Suspensionsmittel suspendierte Partikel aufweist, und eines Copolymers eines Organosiloxans und eines copolymerisierbaren organischen Monomers als Emulgator,
Emulgieren des entstandenen Gemischs, so daß eine Emulsion der flüssigen Suspension des Lichtventils im vernetzbaren flüssigen Polyorganosiloxan-Oligomer oder -Polymer erzeugt wird, und
Vernetzen des vernetzbaren, flüssigen Polyorganoslloxan-Oligomers oder -Polymers, während das Gemisch in Form einer dünnen Schicht der Emulsion vorliegt.

17. Verfahren nach Anspruch 16,
wobei die Partikel organische Partikel sind.

18. Lichtventil, das gegenüberliegende Zellwände aufweist, zwischen denen ein Folie nach einem der Ansprüche 1 bis 15 so angeordnet ist, um die lichtmodulierende Einheit des Lichtventils zu bilden.

## Revendications

1. Film approprié pour une utilisation comme unité modulant la lumière d'un modulateur de lumière, comprenant une matrice de polymère réticulé (25) contenant, réparties en son sein et en contact direct avec elle,
des gouttelettes (26) d'une suspension liquide de modulateur de lumière,
la suspension liquide de modulateur de lumière (26) comprenant des particules suspendues dans un milieu de suspension liquide,
**caractérisé par le fait que**
la matrice de polymère réticulé (25) est une matrice polymère de polyorganosiloxane réticulé.

2. Film selon la revendication 1, dans lequel ledit polymère de polyorganosiloxane réticulé est un homopolymère ou un copolymère de polyorganosiloxane.

3. Film selon la revendication 1, dans lequel ledit polymère de polyorganosiloxane réticulé est un polymère de polydiméthylsiloxane réticulé.

4. Film selon la revendication 2, dans lequel ledit polymère de polyorganosiloxane réticulé est un polyorganosiloxane réticulé copolymère d'un polydiméthylsiloxane et d'un polyalkylphénylsiloxane.

5. Film selon la revendication 1, dans lequel le milieu de suspension liquide est électriquement résistif et contient en son sein un stabilisant polymère dissout qui empêche une agglomération desdites particules.

6. Film selon la revendication 1, dans lequel les particules sont des particules organiques.

7. Film selon l'une quelconque des revendications précédentes, dans lequel ladite suspension est sous la forme de gouttelettes qui sont sensiblement disjointes l'une de l'autre.

8. Film selon l'une quelconque des revendications précédentes, dans lequel une électrode est en contact avec chaque surface du film.

9. Film selon l'une quelconque des revendications précédentes, dans lequel une électrode est en contact avec chaque surface du film et une couche de protection est en contact avec la surface externe de chacune desdites électrodes.

10. Film selon l'une quelconque des revendications 1 à 7, dans lequel une couche de protection est en contact avec chaque surface du film et une électrode est en contact avec la surface externe de chacune des couches de protection.

11. Film selon l'une quelconque des revendications précédentes, dans lequel lesdites particules sont polarisantes de la lumière.

12. Film selon l'une quelconque des revendications précédentes, dans lequel ledit film, pendant qu'il est dans sa forme réticulée et séchée, a été gonflé avec un liquide appliqué sur sa surface afin de former un film gonflé au liquide qui est moins diffuseur de lumière que ledit film avant d'être gonflé avec ledit liquide.

13. Film selon la revendication 12, dans lequel le film est gonflé avec un liquide choisi parmi un ester aliphatique, un éther, un hydrocarbure aliphatique à chaîne rectiligne ou ramifiée, cycloaliphatique ou aromatique, et un hydrocarbure halogéné ou perhalogéné, sous forme liquide.

14. Film selon la revendication 12, dans lequel le film est gonflé avec du toluène ou du xylène liquide, ou un polymère fluorocarboné liquide à faible masse moléculaire ayant une densité d'au moins 1,5 et ayant au moins environ 50% de ses atomes constitués par des atomes d'halogène, au moins 60% des atomes d'halogène étant de fluor et le reste de chlore et/ou de brome.

15. Film selon l'une quelconque des revendications précédentes, dans lequel l'indice de réfraction du film est sensiblement identique à celui des gouttelettes.

16. Procédé de préparation du film selon l'une quelconque des revendications 1, 2, 3 et 4, comprenant le fait de mélanger un oligomère ou polymère de polyorganosiloxane réticulable, une suspension liquide de modulateur de lumière comprenant des particules suspendues dans un milieu de suspension liquide et un copolymère d'un organosiloxane et d'un monomère organique copolymérisable en tant qu'émulsifiant, d'émulsifier le mélange obtenu afin de former une émulsion de ladite suspension liquide de modulateur de lumière dans ledit oligomère ou polymère de polyorganosiloxane liquide réticulable, et de réticuler ledit oligomère ou polymère de polyorganosiloxane liquide réticulable pendant que ledit mélange est sous la forme d'une couche mince de ladite émulsion.

17. Procédé selon la revendication 16, dans lequel lesdites particules sont des particules organiques.

18. Modulateur de lumière ayant des parois de cellule opposées, entre lesquelles un film selon l'une quelconque des revendications 1 à 15 est placé pour former l'unité modulant la lumière du modulateur de lumière.
